Europäisches Patentamt

European Patent Office

Office européen des brevets

(19)

(11) Veröffentlichungsnummer: **0 180 658**
**A1**

# EUROPÄISCHE PATENTANMELDUNG

(12)

(21) Anmeldenummer: **84113401.8**

(22) Anmeldetag: **07.11.84**

(51) Int. Cl.⁴: **G 11 B 5/55**
**//G11B21/08**

(43) Veröffentlichungstag der Anmeldung:
**14.05.86 Patentblatt 86/20**

(84) Benannte Vertragsstaaten:
**AT BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Kohl, Lambert**
**Mandelring 30**
**D-6706 Wachenheim(DE)**

(72) Erfinder: **Roeger, Bernd**
**Steinbrunner Weg 5**
**D-6719 Battenberg(DE)**

(72) Erfinder: **König, Karlheinz**
**Deichstrasse 54**
**D-6700 Ludwigshafen(DE)**

(54) **Vorrichtung zum Positionieren von Gegenständen geringer Masse.**

(57) Eine Positioniervorrichtung ist durch eine Drehlagerführung gekennzeichnet, bei der ein einseitiger Andruck (18) und eine einseitige Höhenausrichtung (17) des zu positionierenden Gegenstands (7) ausreicht, eine eindeutige Zwangsführung, praktisch ohne Abweichung von der Bewegungsachse, bereitzustellen. Die Vorrichtung ist für alle Arten von Informations-Aufzeichnungs-Wiedergabeeinrichtungen mit platten- oder scheibenförmigen Medien geeignet, aber auch für Positionieraufgaben bei Robotern etc..

FIG.2

EP 0 180 658 A1

## Vorrichtung zum Positionieren von Gegenständen geringer Masse

Die Erfindung betrifft eine Vorrichtung zum Positionieren von Gegenständen geringer Masse, insbesondere von Magnetköpfen auf ausgewählte Magnetspuren von mindestens einer mit einem Antrieb kuppelbaren Magnetplatte in einem Magnetplattenspeicher, in dem eine in Richtung zur Magnetplattenachse verschiebbare Führungsplatte mit zur Horizontalebene schräg angeordneten ebenen Randflächen mindestens einen Magnetkopf trägt, wobei die Führungsplatte mittels mit den Randflächen in Kontakt stehenden Führungselementen relativ zum Gerätechassis verschiebbar gelagert und über ein Antriebsorgan zur Magnetplattenachse hin- und davon zurückbewegbar ist und wobei die Führungselemente aus einem ersten und zweiten Wälzlager sowie einer dazwischen an der Führungsplatte angreifenden Andruckeinrichtung bestehen.

Es ist eine Positioniervorrichtung bekannt (DE-GM Nr. 82 15 555), wobei zwei Wälzlagerpaare auf getrennten stationären Lagerträgern sowie ein dazwischen angeordnetes, auf einem Federblech kardanisch bewegliches drittes Wälzlagerpaar auf einem Bügel angeordnet ist. Während auf den beiden ersten Lagerpaaren die Schrägflächen der Führungsplatte aufliegen, soll das dazwischen liegende Lagerpaar die Höhenlage sowie die Richtung der Längsbewegung sicherstellen. Dadurch, daß die Wälzlager starr miteinander verbunden sind, verändert sich bei Änderung der Lage eines der Lager auch diejenige des anderen Lagers. Durch äußere Einwirkungen ist also eine stabile räumliche Führung der Führungsplatte nicht gewährleistet. Der Einsatz in Magnetplattenlaufwerken mit je einem jeder Plattenseite zugeordneten Kopf, die vertikal über- und untereinander angeordnet sind, ist jedoch möglich, da die seitlichen Richtungsabweichungen, weil alle Köpfe betroffen sind, keine große Rolle spielen.

Es ist ferner eine Verbesserung zu vorstehender Vorrichtung bekannt geworden (DE-GM 83 26 795), wobei das vorderste der stationären Lagerpaare in Grenzen seitenbeweglich ausgebildet wurde, um vorhandene Fertigungs- und Justiertoleranzen zu eliminieren.

Es ist ferner ein Linearmotor-Positionierer bekannt (US-PS 3 521 092), in dem ein beweglicher Positionierschlitten mit drei im Dreieck angeordneten Rollen auf der ebenen Oberseite einer stationären Führungsplatte in Kontakt steht und zwei federnd gelagerte Rollen jeweils in der Höhe einer der vorgenannten Rollen auf den Schrägflächen der Führungsplatte vorgesehen sind. Eine zuverlässige und sicher wiederholbare Führung, insbesondere für die Positionierung von Magnetköpfen auf sehr schmale Aufzeichnungsspuren, hoher Aufzeichnungsdichte ist damit kaum realisierbar.

Der Erfindung liegt die Aufgabe zugrunde, für Abtastorgane eine verbesserte Positioniervorrichtung bereitzustellen, die einfach und zuverlässig und kostenmäßig günstig ist.

Die Aufgabe wird mit einer Positioniervorrichtung der eingangs definierten Art damit gelöst, daß die Andruckeinrichtung aus einem stationären Höhenausrichtelement für die Führungsplatte sowie einem beweglichen Führungselement besteht, wobei Höhenausrichtelement und bewegliches Führungselement eine geringe Reibung gegenüber der Führungsplatte aufweisen und über das bewegliche Führungselement mittels eines Federlagers ein ständiger Kontakt zwischen Führungsplatte, dem Höhenausrichtelement und den Drehlagern eingestellt wird.

Damit wird eine praktisch spielfreie Verbindung zwischen der Führungsplatte und den Führungselementen erreicht, die auch bei Anordnung der vorderen und hinteren Drehlagerpaare in unterschiedlichen Höhenlagen aufrechterhalten bleibt. Dadurch ergibt sich für die Führungsplatte in jeder realisierbaren Ebene eine überraschend richtungsstabile Längs- oder Querführung, die bei allen Arten von Aufzeichnungs- und Wiedergabegeräten mit platten- oder scheibenförmigen Aufzeichnungsträgern, wie optischen, kapazitiven, piezoelektrischen, magnetostriktiven oder magnetischen Geräten anwendbar ist.

Zweckmäßig ist das Höhenausrichtelement und das bewegliche Führungselement jeweils mit einem Drehlager, insbesondere als handelsübliches Rillenkugellager ausgebildet, so daß die Herstellung sehr kostengünstig ist.

Wenn das Höhenausrichtelement in der Höhe zum Gerätechassis und damit zu den übrigen Drehlagern verstellbar ist, wird erreicht, daß die Höhenlage der Führungsplatte sehr genau einjustierbar ist oder daß Führungsplatten verschiedener Abmessungen in derselben Positioniervorrichtung ohne Verlust an Genauigkeit in Bezug auf die Bewegungsrichtung einsetzbar sind.

Für einen einfachen Zusammenbau der Vorrichtung sind die Drehlager und das Höhenausrichtelement sowie das bewegliche Führungselement auf einem gemeinsamen Lagerträger angeordnet.

Zweckmäßig liegen sich das Höhenausrichtelement und das bewegliche Führungselement etwa auf einer Querachse der Führungsplatte gegenüber, wodurch die Andruckkraft auf kürzestem Weg an das Höhenausrichtelement übertragen wird.

Praktisch günstig sind das Höhenausrichtelement und das bewegliche Führungselement jeweils etwa in der Mitte zwischen den Drehlagern an der jeweiligen Seite der Führungsplatte angeordnet, so daß die direkte und indirekte Andruckkraft möglichst gleichmäßig auf die Lager verteilt wird.

In spezieller Ausführung einer Positioniervorrichtung, wenn das Antriebsorgan aus einem Schrittmotor mit Antriebswelle auf einem daran befestigten Spulrad besteht und zwischen Spulrad und Führungsplatte ein aufwickelbares Antriebsband vorgesehen ist, ist es vorteilhaft, wenn das in Richtung zur Magnetplattenachse gesehene hintere Ende des Lagerträgers mit einem einseitig offenen L-förmigen Ausschnitt zur Aufnahme des Spulrades ausgebildet ist und an den Ausschnitt begrenzenden Fortsatz der Lagerträgers eines der Drehlager angeordnet ist.

Damit wird eine besonders raumsparende und dennoch voll funktionsfähige Positioniervorrichtung bereitgestellt, die nicht den schwerwiegenden Nachteil aus dem Stand der Technik aufweist, daß das Spulrad selbst als Auflage- und Führungselement für die Führungsplatte dienen muß.

In dieser erfindungsgemäßen Ausführung ist es lagermäßig günstig, wenn die einander gegenüberliegenden Drehlagerpaare in Trapezform angeordnet sind, wodurch die größtmögliche Auflagebasis für die Führungsplatte erreicht wird. Praktisch sehr vorteilhaft kann das bewegliche Führungselement ein an einem Winkelhebel befestigtes Drehlager sein, das als Federlager einen einseitig am Lagerträger befestigten Federstift besitzt.

Damit ist ein wirksames Andruckelement realisierbar, das eine vorgegebene Federkraft gewährleistet und das außerdem schnell und einfach herstellbar und montierbar ist.

Praktisch sehr vorteilhaft ist es, wenn der Lagerträger mit den Wälzlagern, dem Höhenausrichtelement und dem beweglichen Führungselement, vorzugsweise einschließlich der Führungsplatte, als vormontierbare Baueinheit ausgebildet sind.

Durch diesen problemlosen Zusammenbau außerhalb des Geräts ist außerdem auch ein Nachrüsten vorhandener Geräte mit der Vorrichtung möglich und veraltete oder nicht mehr funktionstüchtige Positionierer lassen sich ohne weiteres schnell und einfach durch die erfindungsgemäße, vorteilhafte Vorrichtung ersetzen.

In weiterer zweckmäßiger Ausführung der Positioniervorrichtung ist der Lagerträger mit Justierbohrungen für Justierzapfen auf dem Chassis versehen und besitzt eine Befestigungsbohrung für eine Befestigungsschraube.

Damit ist nach Zusammenbau der Vorrichtung eine sehr einfache Montage im Gerät möglich unter Gewährleistung der erforderlichen Montagegenauigkeit.

Insgesamt ergeben sich mit der erfindungsgemäßen Vorrichtung, je nach Ausbildung gemäß der Merkmale der Patentansprüche, einzeln und in ihren Merkmalskombinationen, folgende Vorteile:

a) eine praktisch spielfreie Verbindung zwischen der Führungsplatte und den Führungselementen, die auch erhalten bleibt, wenn der oder die Lagerträger nicht in einer horizontalen Ebene liegen

b) eine leichtgängige Zwangsführung für die Führungsplatte

c) den Ausschluß einer Veränderung der einmal eingestellten Lage der Führungsplatte auf ihrem Bewegungsweg durch die definierte, einseitige Höhenausrichtung der Führungsplatte und die definierte Andruckkraft auf der anderen Plattenseite

d) eine ausgezeichnete Richtungsstabilität der Vorrichtung, die damit auch für eine Mehrzahl von nebeneinanderliegenden Abtastorganen einsetzbar wird

e) eine problemlose und kostengünstige Herstellbarkeit der Einzelteile ohne enge Toleranzen

f) eine einfache komplette Montage und Justage der Einzelteile zur Baueinheit außerhalb des Gerätes, vorzugsweise einschließlich der Führungsplatte

g) eine leichte und genaue Montage der Baueinheit im Gerät.

Einzelheiten der Erfindung sind der folgenden Beschreibung und Zeichnung eines Ausführungsbeispiels einer Positioniervorrichtung für Magnet-Festplattenspeicher entnehmbar.

In der Zeichnung zeigt

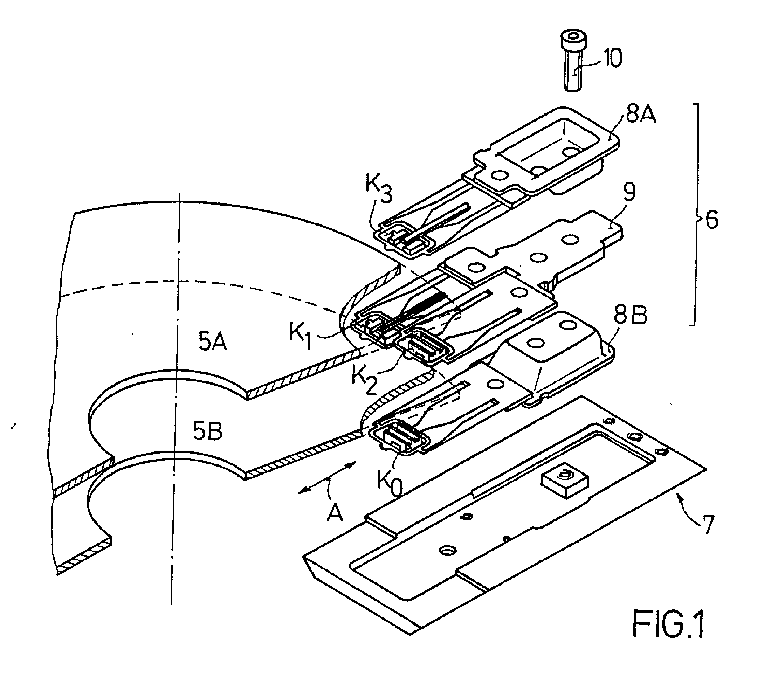

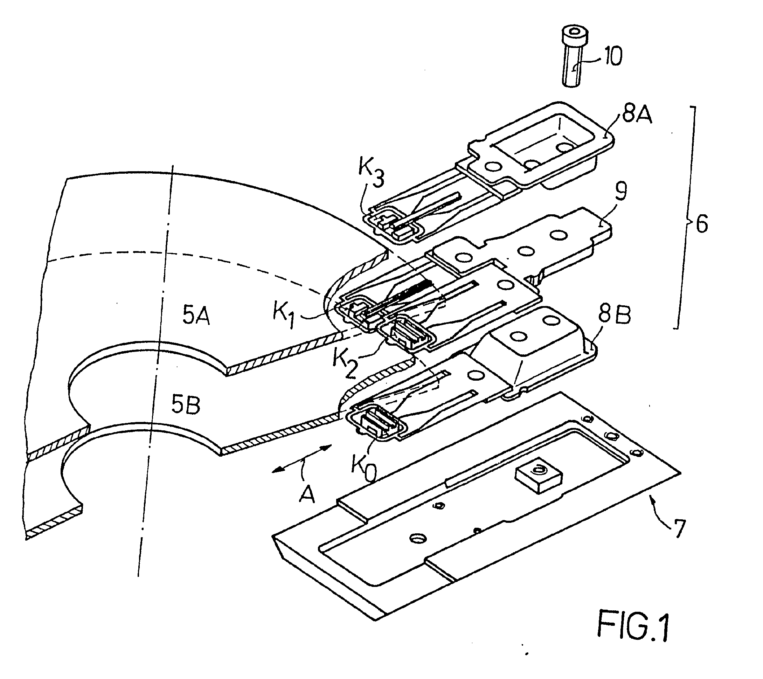

Figur 1 eine schematisch dargestellte Magnetplattenanordnung mit Magnetköpfen und deren Führungsplatte

Figur 2 die Führungsplatte aus Figur 1 mit Lagerträger(n) und Führungselementen

Figur 3 die Führungsplatte mit einem gemeinsamen Lagerträger und den Führungselementen in Zusammenbaudarstellung.

Zwei konzentrische Magnetplatten 5A und 5B sind über eine nicht dargestellte Antriebseinheit drehbar und mittels einer Kopfeinheit 6, im wesentlichen bestehend aus Magnetköpfen Ko-K3, die auf einer Führungsplatte 7 befestigt sind, in bezug auf die Magnetspuren bewegbar. Die Magnetköpfe KO und K3 sind der Unterseite der Platte 5B bzw. der Oberseite der Platte 5A zugeordnet und liegen vertikal übereinander. Dagegen sind aus Platzgründen die Köpfe K1 und K2 mit Abstand nebeneinander angeordnet und K1 ist der Oberseite der Platte 5B und K2 der Unterseite von 5A zugeordnet. Die Kopfträger sind mit 8A, 8B und 9 bezeichnet und werden mittels einer gemeinsamen Schraube 10 auf der Führungsplatte 7 befestigt. Die Kopfeinheit 6 ist gemäß Doppelpfeil A zu den Platten hin- und zurückschiebbar mittels eines nicht dargestellten Antriebsorgans, wie z.B. eines Schrittmotors, der in beliebiger Weise mit der Führungsplatte 7 geeignet verbunden ist und dessen Bewegungen gesteuert sind.

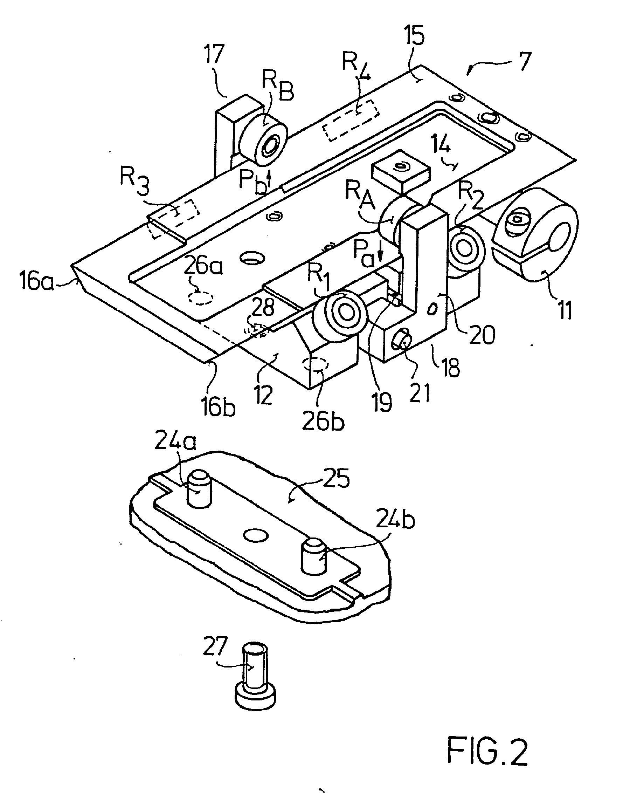

In Figur 2 ist die Führungsplatte 7 mit Lager- und Führungselementen und einem Spulrad 11 als Teil eines Antriebsorgans dargestellt. Dabei sind ein oder zwei Lagerträger 12 für stationäre Führungselemente, Lagerrollen R1-R4 vorgesehen, die beispielsweise als Rillenkugellager ausgebildet sind. Das Spulrad 11 ist beispielsweise über ein nicht gezeigtes Antriebsband an der Unterseite der Führungsplatte 7 mit dieser verbunden. Es sind andere Antriebsmöglichkeiten benutzbar, nur sollte sichergestellt werden, daß die Führungsplatte 7 in jedem Fall keinen Kontakt mit weiteren Führungselementen als mit den beschriebenen Lagerrollen R1-R4 und den noch zu beschreibenden Führungselementen besitzt. Das Spulrad 11 ist deshalb auch mit Abstand zur Führungsplatte 7 angeordnet und das Verbindungsglied ist lediglich das nicht gezeigte flexible Antriebsband.

Die Führungsplatte 7 weist eine flache Vertiefung 14 zur Aufnahme des Kopfträgers 8b auf und besitzt eine obere ebene Umfangsrandfläche 15. An der Unterseite sind zu den oberen Flächen der Platte 7 schräg, insbesondere unter 45°, dazu angeordnete ebene Randflächen 16a und 16b vorgesehen. Die Lagerrollen R1-R4 stehen mit diesen Randflächen 16a und 16b in Kontakt und sind daher ebenfalls unter 45° zu den Ebenen der oder des Lagerträger(s) oder im 90°-Winkel gegeneinander ausgerichtet. Zur Halterung und Ausrichtung der Führungsplatte 7 sind zwischen dem vorderen Lagerrollenpaar R1 und R3 und dem hinteren Paar R2 und R4, insbesondere etwa in der Mitte der Rollenpaare, zwei weitere Führungselemente, ein Höhenausrichtelement 17 und ein Andruckelement 18 vorgesehen. Das Höhenausrichtelement 17 ist ein Tragteil mit einer drehbaren Lagerrolle RB und ist zweckmäßig stationär gegenüber dem Chassis gelagert, insbesondere am Lagerträger 12 direkt befestigt und insbesondere z.B. mit einer Langloch/ Schrauben-Befestigung in der Höhe justierbar. Das Höhenausrichtelement 17 besitzt zweckmäßig gegenüber der Führungsplatte 7 einen sehr geringen Reibwiderstand und enthält daher ebenfalls eine Lagerrolle RB. Damit läßt sich über die Höhe des Elements 17 ein vorbestimmter Abstand zu den Rollen R3 und R4 einstellen, was entweder nur einmal bei der Fertigung erfolgt oder was vorgenommen wird, wenn die Führungsplatte 7 gegen eine gleiche oder eine dimensionsmäßig andere ausgetauscht wird. Zwischen den Lagerrollen R1 und R2 ist als Andruckeinrichtung für die Führungsplatte 7 ein bewegliches, auf jeden Fall relativ zur Führungsplatte 7 bewegliches, federnd gelagertes Führungselement 18 vorgesehen. Dies Führungselement 18 soll wie auch alle anderen der Führungsplatte 7 gegenüber einen möglichst geringen Reibwiderstand aufweisen und ist deshalb ebenfalls mit einer Lagerrolle RA ausgebildet. Über ein Federlager ist das Führungselement 18, im Beispiel bestehend aus einem schwenkbaren Winkelhebel 20 mit daran drehbar gelagerter Rolle RA am Lagerträger 12 befestigt, so daß zumindest eine Andruckkraftkomponente auf die Oberseite der Führungsplatte 7 wirkt. Das Federlager, ein Federstift 19, ist z.B. ein Stahlstift, der in eine Bohrung in einem Schlitz des Lagerträgers 12 leicht einsetzbar ist, und der die Lagerrolle RA ständig auf die obere ebene Randfläche 15 drückt. Die wirksame Andruckkraft Pa kann im Bereich von ca. 20 bis 100 pond, vorzugsweise im Bereich von 40 bis 60 pond, gewählt werden bei einem Positionierer z.B. in einem 5 1/2"-Festplattenspeicher vom Typ "BASF 6188 Slim Line". Das ist etwa 1/50 bis 1/10 der Andruckkraft, die bei einem Positionierer gemäß oben zitiertem Stand der Technik aufzuwenden ist, um eine ausreichende Auflage und Genauigkeit der Positionierung von senkrecht übereinanderliegenden Köpfen zu erreichen.

Allgemein soll die Andruckkraft Pa in Ausführungsbeispielen gemäß vorliegender Erfindung so gewählt werden, daß ein Kontakt zwischen der Führungsplatte 7 und den Führungselementen (R1-R4, RA, RB) sichergestellt ist, auch wenn Vibrationstest in allen Richtungen überstanden werden müssen in allen wichtigen Frequenzbereichen bis ca. 1000 Hz.

Die wirksame Andruckkraft der Rolle RA kippt die Führungsplatte 7 um ihre Mittellängsachse in ihre vorbestimmte Lage, in den meisten Fällen parallel zur Basisebene der oder des Lagerträger(s) 12. Die Andruckkraft wird über die schräge Randfläche 16a in Richtung der Rolle RB umgelenkt und die dort wirksame Andruckkraft Pb stellt den Kontakt zwischen Umfangsrandfläche 15 der Führungsplatte 7 und der Rolle RB sicher, wobei weitere Kraftkomponenten eine einen ständigen Kontakt zwischen den Rollen R1-R4 aufrechterhaltende Größe besitzen. Durch die gewählte prismaähnliche Anordnung der Führungselemente und der Führungsplatte 7 ist eine sichere Auf- und Anlage der Platte 7 gewährleistet. Außerdem ist bei geeigneter Wahl der Lagerelemente z.B. als Rillenkugellager eine leichtgängige Zwangsführung für die Platte 7 in ihrer Längsrichtung gewähr-Zwei konzentrische Magnetplatten 5A und 5B sind über eine nicht dargestellte Antriebseinheit drehbar und mittels einer Kopfeinheit 6, im wesentlichen bestehend aus Magnetköpfen Ko-K3, die auf einer Führungsplatte 7 befestigt sind, in bezug auf die Magnetspuren bewegbar. Die Magnetköpfe KO und K3 sind der Unterseite der Platte 5B bzw. der Oberseite der
Platte 5A zugeordnet und liegen vertikal übereinander. Dagegen sind aus
Platzgründen die Köpfe K1 und K2 mit Abstand nebeneinander angeordnet und
K1 ist der Oberseite der Platte 5B und K2 der Unterseite von 5A zugeordnet. Die Kopfträger sind mit 8A, 8B und 9 bezeichnet und werden mittels
einer gemeinsamen Schraube 10 auf der Führungsplatte 7 befestigt. Die
Kopfeinheit 6 ist gemäß Doppelpfeil A zu den Platten hin- und zurückschiebbar mittels eines nicht dargestellten Antriebsorgans, wie z.B. eines Schrittmotors, der in beliebiger Weise mit der Führungsplatte 7 geeignet verbunden ist und dessen Bewegungen gesteuert sind.

In Figur 2 ist die Führungsplatte 7 mit Lager- und Führungselementen und
einem Spulrad 11 als Teil eines Antriebsorgans dargestellt. Dabei sind
ein oder zwei Lagerträger 12 für stationäre Führungselemente, Lagerrollen R1-R4 vorgesehen, die beispielsweise als Rillenkugellager ausgebildet
sind. Das Spulrad 11 ist beispielsweise über ein nicht gezeigtes Antriebsband an der Unterseite der Führungsplatte 7 mit dieser verbunden.
Es sind andere Antriebsmöglichkeiten benutzbar, nur sollte sichergestellt
werden, daß die Führungsplatte 7 in jedem Fall keinen Kontakt mit weiteren Führungselementen als mit den beschriebenen Lagerrollen R1-R4 und den
noch zu beschreibenden Führungselementen besitzt. Das Spulrad 11 ist deshalb auch mit Abstand zur Führungsplatte 7 angeordnet und das Verbindungsglied ist lediglich das nicht gezeigte flexible Antriebsband.

Die Führungsplatte 7 weist eine flache Vertiefung 14 zur Aufnahme des
Kopfträgers 8b auf und besitzt eine obere ebene Umfangsrandfläche 15. An
der Unterseite sind zu den oberen Flächen der Platte 7 schräg, insbesondere unter 45°, dazu angeordnete ebene Randflächen 16a und 16b vorgesehen. Die Lagerrollen R1-R4 stehen mit diesen Randflächen 16a und 16b in
Kontakt und sind daher ebenfalls unter 45° zu den Ebenen der oder des Lagerträger(s) oder im 90°-Winkel gegeneinander ausgerichtet. Zur Halterung
und Ausrichtung der Führungsplatte 7 sind zwischen dem vorderen Lagerrollenpaar R1 und R3 und dem hinteren Paar R2 und R4, insbesondere etwa in
der Mitte der Rollenpaare, zwei weitere Führungselemente, ein Höhenausrichtelement 17 und ein Andruckelement 18 vorgesehen. Das Höhenausrichtelement 17 ist ein Tragteil mit einer drehbaren Lagerrolle RB und ist
zweckmäßig stationär gegenüber dem Chassis gelagert, insbesondere am Lagerträger 12 direkt befestigt und insbesondere z.B. mit einer Langloch/
Schrauben-Befestigung in der Höhe justierbar. Das Höhenausrichtelement 17
besitzt zweckmäßig gegenüber der Führungsplatte 7 einen sehr geringen Reibwiderstand und enthält daher ebenfalls eine Lagerrolle RB. Damit läßt sich über die Höhe des Elements 17 ein vorbestimmter Abstand zu den Rollen R3 und R4 einstellen, was entweder nur einmal bei der Fertigung erfolgt oder was vorgenommen wird, wenn die Führungsplatte 7 gegen eine gleiche oder eine dimensionsmäßig andere ausgetauscht wird. Zwischen den Lagerrollen R1 und R2 ist als Andruckeinrichtung für die Führungsplatte 7 ein bewegliches, auf jeden Fall relativ zur Führungsplatte 7 bewegliches, federnd gelagertes Führungselement 18 vorgesehen. Dies Führungselement 18 soll wie auch alle anderen der Führungsplatte 7 gegenüber einen möglichst geringen Reibwiderstand aufweisen und ist deshalb ebenfalls mit einer Lagerrolle RA ausgebildet. Über ein Federlager ist das Führungselement 18, im Beispiel bestehend aus einem schwenkbaren Winkelhebel 20 mit daran drehbar gelagerter Rolle RA am Lagerträger 12 befestigt, so daß zumindest eine Andruckkraftkomponente auf die Oberseite der Führungsplatte 7 wirkt. Das Federlager, ein Federstift 19, ist z.B. ein Stahlstift, der in eine Bohrung in einem Schlitz des Lagerträgers 12 leicht einsetzbar ist, und der die Lagerrolle RA ständig auf die obere ebene Randfläche 15 drückt. Die wirksame Andruckkraft Pa kann im Bereich von ca. 20 bis 100 pond, vorzugsweise im Bereich von 40 bis 60 pond, gewählt werden bei einem Positionierer z.B. in einem 5 1/2"-Festplattenspeicher vom Typ "BASF 6188 Slim Line". Das ist etwa 1/50 bis 1/10 der Andruckkraft, die bei einem Positionierer gemäß oben zitiertem Stand der Technik aufzuwenden ist, um eine ausreichende Auflage und Genauigkeit der Positionierung von senkrecht übereinanderliegenden Köpfen zu erreichen.

Allgemein soll die Andruckkraft Pa in Ausführungsbeispielen gemäß vorliegender Erfindung so gewählt werden, daß ein Kontakt zwischen der Führungsplatte 7 und den Führungselementen (R1-R4, RA, RB) sichergestellt ist, auch wenn Vibrationstest in allen Richtungen überstanden werden müssen in allen wichtigen Frequenzbereichen bis ca. 1000 Hz.

Die wirksame Andruckkraft der Rolle RA kippt die Führungsplatte 7 um ihre Mittellängsachse in ihre vorbestimmte Lage, in den meisten Fällen parallel zur Basisebene der oder des Lagerträger(s) 12. Die Andruckkraft wird über die schräge Randfläche 16a in Richtung der Rolle RB umgelenkt und die dort wirksame Andruckkraft Pb stellt den Kontakt zwischen Umfangsrandfläche 15 der Führungsplatte 7 und der Rolle RB sicher, wobei weitere Kraftkomponenten eine einen ständigen Kontakt zwischen den Rollen R1-R4 aufrechterhaltende Größe besitzen. Durch die gewählte prismaähnliche Anordnung der Führungselemente und der Führungsplatte 7 ist eine sichere Auf- und Anlage der Platte 7 gewährleistet. Außerdem ist bei geeigneter Wahl der Lagerelemente z.B. als Rillenkugellager eine leichtgängige Zwangsführung für die Platte 7 in ihrer Längsrichtung gewährleistet. In der Praxis ist eine Abweichung von der idealen Bewegungsrichtung der Platte nicht meßbar bei völliger Übereinstimmung der Vor- und Zurückbewegungsvorgänge. Die vorgeschriebene Genauigkeitsanforderung von $\pm$ 1,5$\mu$m in Radialrichtung bei Raumtemperatur wird mit der erfindungsgemäßen Vorrichtung überraschenderweise ebenso erreicht wie die zulässige Seitenabweichung beim Positionierer gemäß DE-GM 82 15 555, die etwa $\pm$5 $\mu$m beträgt, die aber bei der erfindungsgemäßen Vorrichtung überraschenderweise gar nicht auftritt (s.o.).

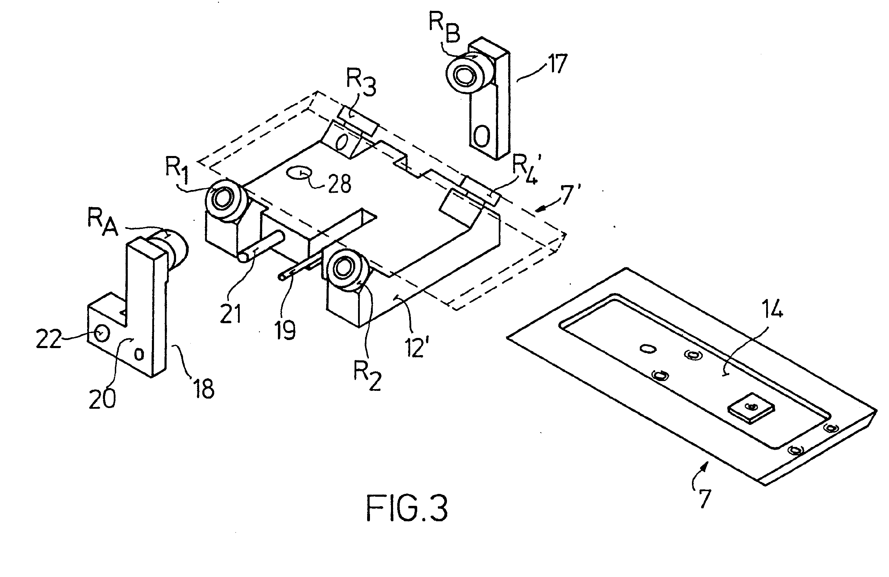

In Figur 3 sind die Einzelteile des Positionierers einzeln vor ihrem Zusammenbau dargestellt. Dabei ist mit 21 die Schwenkachse für den Winkelhebel und mit 22 die Bohrung dafür bezeichnet. Die Führungsplatte 7 ist einmal als 7' gestrichelt und einmal ausgezogen dargestellt.

In Figur 2 sind Justierzapfen 24a und 24b, die auf dem Chassis 25 angeordnet sind, vorgesehen, um die als Baueinheit zusammenmontierte Vorrichtung komplett aufzunehmen. Justierbohrungen 26a und 26b sind vorne in der Unterseite des Lagerträgers 12 vorgesehen. Eine einzige Befestigungsschraube 27 dient zur einfachen und schnellen Befestigung der Baueinheit. In dem Lagerträger 7 ist eine Befestigungsbohrung 28, hier mit Gewinde, vorgesehen. Die Rollenlager R1 bis R4 sind in Figur 2 in Trapezform angeordnet, um in der Ausführung mit Spulradantrieb eine größtmögliche Führung in Längsrichtung zu erreichen. Die Rolle R4 hat also einen größeren Abstand von der Rolle R3 als die Rollen R1 und R2 voneinander. In Figur 3 besitzt die Rolle R4' jedoch denselben Abstand von der Rolle R3.

Bei vorliegender Erfindung soll unter Drehlager ein irgendwie geartetes Kugel- oder Rollenlager oder Gleitlager verstanden werden. Rillenkugellager haben sich in der Praxis gut bewährt und sind wirtschaftlich, da sie in hohen Stückzahlen gefertigt werden. In diesem Sinne sind die Lagerrollen also z.B. Rillenkugellager. Je nach der Anwendung der vorliegenden Erfindung z.B. im Falle von längeren Positionierzeiten ist es aber durchaus möglich, die Lager R1 bis R4, RA und RB als Gleitlager auszubilden. Dabei sollten mindestens die Lager R1 bis R4 jedoch immer aus gleichartigen Lagern aufgebaut sein.

Die Art der Zwangsführung der Führungsplatte oder eines anderen Tragteils für Abtastelemente läßt es auch zu, dieses in einer anderen als in der Horizontalebene zu fahren. Z.B. sind Schräglagen oder Vertikallagen möglich, wobei die Positioniergenauigkeit bei der Vor- und Zurückbewegung ebenfalls gewährleistet ist. Es sind also viele andere Positionieranwendungen wie z.B. an Montage-Robotern denkbar.

Patentansprüche

1. Vorrichtung zum Positionieren von Gegenständen geringer Masse, insbesondere von Magnetköpfen (K1-K4) auf ausgewählte Magnetspuren von mindestens einer mit einem Antrieb kuppelbaren Magnetplatte (5A, 5B) in einem Magnetplattenspeicher, in dem eine in Richtung zur Magnetplattenachse verschiebbare Führungsplatte (1) mit zur Horizontalebene schräg angeordneten ebenen Randflächen mindestens einen Magnetkopf trägt, wobei die Führungsplatte (7) mittels mit den Randflächen in Kontakt stehenden Führungselementen relativ zum Gerätechassis verschiebbar gelagert und über ein Antriebsorgan zur Magnetplattenachse hin und davon zurückbewegbar ist und wobei die Führungselemente aus einem ersten und zweiten Drehlagerpaar (R1, R2 und R3, R4) sowie einer dazwischen an der Führungsplatte angreifenden Andruckeinrichtung bestehen, dadurch gekennzeichnet, daß die Andruckeinrichtung aus einem stationären Höhenausrichtelement (17) für die Führungsplatte (7) sowie einem beweglichen Führungselement (18) besteht, wobei Höhenausrichtelement (17) und bewegliches Führungselement (18) eine geringe Reibung gegenüber der Führungsplatte (7) aufweisen und über das bewegliche Führungselement (18) mittels eines Federlagers (19) ein ständiger Kontakt zwischen Führungsplatte (7), dem Höhenausrichtelement (17) und den Drehlagern (R1, R2 und R3, R4) eingestellt wird.

2. Positioniervorrichtung nach Anspruch 1, dadurch gekennzeichnet, daß das Höhenausrichtelement (17) und das bewegliche Führungselement (18) jeweils mit einem Drehlager (RB bzw. RA) ausgebildet sind.

3. Positioniervorrichtung nach Ansprüchen 1 und 2, dadurch gekennzeichnet, daß das Höhenausrichtelement (17) in der Höhe relativ zum Gerätechassis (25) verstellbar ist.

4. Positioniervorrichtung nach Anspruch 1, dadurch gekennzeichnet, daß die Drehlager und das Höhenausrichtelement (17) und das bewegliche Führungselement (18) auf einem gemeinsamen Lagerträger (12) angeordnet sind.

5. Positioniervorrichtung nach Anspruch 1 und einem oder mehreren der Ansprüche 2 bis 4, dadurch gekennzeichnet, daß sich das Höhenausrichtelement (17) und das bewegliche Führungselement (18) etwa auf einer Querachse der Führungsplatte (7) gegenüberliegen.

529/84 De/St

6. Positioniervorrichtung nach Anspruch 1 oder 1 und 5, dadurch gekennzeichnet, daß das Höhenausrichtelement (17) und das bewegliche Führungselement (18) jeweils etwa in der Mitte zwischen den Drehlagern (R1 und R2 bzw. R3 und R4) an der jeweiligen Seite der Führungsplatte (7) angeordnet ist.

7. Positioniervorrichtung nach Anspruch 1, bei dem das Antriebsorgan aus einem Schrittmotor mit Antriebswelle auf einem daran befestigten Spulrad 11 besteht und zwischen Spulrad (11) und Führungsplatte (7) ein aufwickelbares Antriebsband vorgesehen ist, dadurch gekennzeichnet, daß das in Richtung zur Magnetplattenachse gesehen hintere Ende des Lagerträgers (12) mit einem einseitig offenen L-förmigen Ausschnitt zur Aufnahme des Spulrades (11) ausgebildet ist und an den Ausschnitt begrenzenden Fortsatz des Lagerträgers (12) eines der Drehlager (R4', Figur 2) angeordnet ist.

8. Positioniervorrichtung nach Anspruch 7, dadurch gekennzeichnet, daß die einander gegenüberliegenden Drehlagerpaare (R1, R2 und R3, R4) in Trapezform angeordnet sind.

9. Positioniervorrichtung nach Anspruch 1 und einem oder mehreren der Ansprüche 2 bis 8, dadurch gekennzeichnet, daß das bewegliche Führungselement (18) ein an einem Winkelhebel (20) befestigtes Drehlager (RA) ist, das als Federlager einen einseitig am Lagerträger (12) befestigten Federstift (19) besitzt.

10. Positioniervorrichtung nach Anspruch 1 und 4 und einem oder mehreren der Ansprüche 2, 3 und 5 bis 9, dadurch gekennzeichnet, daß der Lagerträger (12) mit den Drehlagern (R1-R4) dem Höhenausrichtelement (17) und dem beweglichen Führungselement (18), insbesondere einschließlich der Führungsplatte (7), als vormontierbare Baueinheit (Figur 2) ausgebildet sind.

11. Positioniervorrichtung nach Anspruch 10, dadurch gekennzeichnet, daß der Lagerträger (12) Justierbohrungen (26a und 26b) für Justierzapfen (24a und 24b) auf dem Chassis (25) und eine Befestigungsbohrung (28) für eine Befestigungsschraube (27) aufweist.

Zeichn.

O.Z. 0050/37431
0180658

FIG.1

o.z. 0050/374
018065

FIG.1

0.z. 0050/37431
0180658

FIG.2

FIG.3

0.Z. 0050/37431

Europäisches
Patentamt

**EUROPÄISCHER RECHERCHENBERICHT**

**0180658**
Nummer der Anmeldung

EP 84 11 3401

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 071 083 (BASF AG)  <br> * Zusammenfassung; Ansprüche; Figuren 1,4 * | 1,2,4-6 | G 11 B 5/55 //  <br> G 11 B 21/08 |
| A | PATENTS ABSTRACTS OF JAPAN, Band 4, Nr. 95 (P-18)[577], 9. Juli 1980, Seite 106P18; & JP - A - 55 55482 (TOKYO SHIBAURA DENKI K.K.) 23.04.1980 <br> * Insgesamt * | 1-6 | |
| A | US-A-3 838 455 (BARNARD) <br> * Spalte 2, Zeilen 10-57; Figuren 1-4 * | 1,2,4-6 | |
| A | US-A-4 006 372 (BROWN Jr. u.a.) <br> * Spalte 3, Zeile 18 - Spalte 4, Zeile 61; Spalte 6, Zeilen 14-20; Figuren 1-3 * | 1,2,9 | RECHERCHIERTE SACHGEBIETE (Int. Cl.4)  <br><br> G 11 B |
| A | US-A-3 847 454 (PEJCHA) <br> * Spalte 2, Zeilen 44-48; Spalte 3, Zeilen 10-51; Figuren 1-6 * | 1,2,9-11 | |
| A | US-A-3 922 720 (CALETTI u.a.) <br> * Spalte 2, Zeile 50 - Spalte 3, Zeile 18; Figuren 1-3 * | 1,2,9 | |

--- -/-

Der vorliegende Recherchenbericht wurde für alle Patentansprüche erstellt

| Recherchenort <br> DEN HAAG | Abschlußdatum der Recherche <br> 04-07-1985 | Prüfer <br> FUX J. |
|---|---|---|

Europäisches
Patentamt

EUROPÄISCHER RECHERCHENBERICHT

0180658
Nummer der Anmeldung

EP 84 11 3401

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | US-A-3 665 433 (GILLUM u.a.)<br>* Spalte 2, Zeilen 20-23; Spalte 3, Zeilen 18-64; Figuren 2-8 * | 1-3,9 | |
| A | PATENTS ABSTRACTS OF JAPAN, Band 2, Nr. 35, 9. März 1978, Seite 12741E77; & JP - A - 53 1509 (HITACHI SEISAKUSHO K.K.) 09.01.1978<br>* Insgesamt * | 1,3,9 | |
| A | GB-A-2 065 824 (ATLANTIC RICHFIELD COMPANY)<br>* Seite 2, Zeilen 48-122; Seite 3, Zeilen 29-32; Figuren 4-7 *· | 1 | |
| A | US-A-4 418 370 (HARRISON)<br><br>* Spalte 1, Zeilen 59-62; Spalte 2, Zeile 66 - Spalte 3, Zeile 27; Spalte 3, Zeile 63 - Spalte 4, Zeile 6; Figuren 1,4 * | 1,2,4, 9 | RECHERCHIERTE SACHGEBIETE (Int. Cl.4) |
| A | EP-A-0 117 158 (HI. TECH PERIPHERALS CORP.) | | |
| A | EP-A-0 109 678 (MICROSCIENCE INTERNATIONAL CORP.) | | |

Der vorliegende Recherchenbericht wurde für alle Patentansprüche erstellt.

| Recherchenort<br>DEN HAAG | Abschlußdatum der Recherche<br>04-07-1985 | Prüfer<br>FUX J. |
|---|---|---|